# EUROPÄISCHE PATENTANMELDUNG

(11) **EP 0 642 730 A1**
(43) Veröffentlichungstag der Anmeldung: **15.03.1995**
(21) Anmeldenummer: 94113982.6
(22) Anmeldetag: 07.09.1994
(51) Int. Cl.: A01D 34/00, A01D 34/82

(54) **Mäher mit einem bodenwärts offenen Gehäuse**

(30) Priorität: 15.09.1993 US 121817; 11.03.1994 US 212071
(71) Anmelder: DEERE & COMPANY, Moline, Illinois 61265 (US)
(72) Erfinder: Kuhn, John Boyd, Rubicon, Wisconsin 53078 (US); Kettler, Daniel James, Horicon, Wisconsin 53032 (US); Stricker, David Keith, Columbus, Wisconsin 53925 (US)
(74) Vertreter: Feldmann, Bernhard

(57) **Zusammenfassung**

Bei einem Mäher mit einem bodenwärts offenen und eine im wesentlichen vertikal verlaufende Seitenwand (14) aufweisenden Gehäuse (10), in dem wenigstens ein durch eine vertikale Spindel (18) antreibbares Messer (26) umläuft, wobei zwischen dem Messer (26) und der Oberseite (12) des Gehäuses (10) ein Scheibenteil (36) mit einem radialen äußeren Abschnitt (50) umläuft, der zu dem Messer (26) einen Vertikalabstand aufweist, weist der Scheibenteil (36) einen weiteren Abschnitt (52) auf, der einen Raum zwischen Messeroberseite, Spindel (18) und der Innenseite des radial außen liegenden Abschnittes (50) des Scheibenteils (36) schließt.

## Beschreibung

Die Erfindung bezieht sich auf einen Mäher mit einem bodenwärts offenen und eine im wesentlichen vertikal verlaufende Seitenwand aufweisenden Gehäuse, in dem wenigstens ein durch eine vertikale Spindel antreibbares Messer umläuft, wobei zwischen dem Messer und der Oberseite des Gehäuses ein Scheibenteil mit einem radialen, äußeren und ringförmigen oder etwa ringförmigen Abschnitt umläuft, der zu dem Messer einen Vertikalabstand aufweist.

Bei diesem Mäher für den Rasenschnitt (US-A-2 888 796) sind bereits erste Vorkehrungen getroffen, damit geschnittenes Gut nicht im Klumpen auf den Boden fällt bzw. in größeren Mengen an der Unterseite der Gehäuseoberseite haften bleibt. Dies soll durch den umlaufenden Scheibenteil erreicht werden, der geradlinig ausgebildet ist und eine Selbstreinigung bewirken soll. Für die Luftzirkulation sind in der Oberseite des Gehäuses und in dem umlaufenden Scheibenteil Luftöffnungen vorgesehen. Allerdings schließt diese bekannte Ausbildung nicht aus, daß Gutteile in den Bereich der mit Bezug auf die Umlaufrichtung des Messers mittig angeordneten Spindel bzw. deren Gehäuse gelangen, wo die Luftströmung relativ gering ist und wo sich deshalb Gutteile gerne ansammeln. Hierdurch wiederum ergeben sich größere Luftwiderstände, wodurch die Luftgeschwindigkeiten und der Auswurf behindert werden. Diese Nachteile treten in einem noch größeren Maße auf, wenn der Mäher zum Mulchen eingesetzt wird, d. h. zu einem Einsatz, bei dem die Gutteile zu einem besseren Verrotten mehrmals geschnitten werden und nicht oder nur in einem unbedeutenden Maße durch einen dann normalerweise blockierten Auswurf austreten.

Um eine große Luftströmung für den Auswurf von Gutteilen zu erreichen und um ein Ansammeln von Gutteilen im Gehäuseinneren zu vermeiden, ist bereits bei einem ähnlich ausgebildeten Mäher vorgeschlagen worden (US-A-3 049 854), nur die Außenbereiche des umlaufenden Messers mit einer Schneide zu versehen, hinter der mit Bezug auf die Umlaufrichtung nachlaufend jeweils ein hochstehender Flügelteil angeordnet ist.

Um die vorgenannten nachteiligen Wirkungen unter Beibehaltung der Vorteile zumindest teilweise zu vermeiden, sieht die Erfindung vor, daß der Scheibenteil einen weiteren Abschnitt aufweist, der einen Raum zwischen Messeroberseite, Spindel und der Innenseite des radial außen liegenden Abschnittes des Scheibenteils schließt. Auf diese Weise wird der Raum, in den Luft und Gutteile normalerweise gelangen, durch die sich ergänzenden Abschnitte des Scheibenteils auf die beiden endseitigen Abschnitte des Messers begrenzt, wobei der äußere Abschnitt des Scheibenteils mit einem wesentlichen Abstand zu dem Messer angeordnet ist, damit Luft und Gutteile leicht durch einen Auswurf austreten können. Der weitere Scheibenteilabschnitt kann als geschlossener oder nur an seiner Unterseite geschlossener Hohlzylinder ausgebildet sein. Bevorzugt wird jedoch, daß der weitere Abschnitt des Scheibenteils trichterförmig ausgebildet ist. Damit verläuft der in den äußeren Scheibenteilabschnitt übergehende weitere Abschnitt von oben und von der Seite aus gesehen, umgekehrt kegelstumpfartig nach unten und ist mit seiner ringförmigen und im wesentlichen geschlossenen Bodenseite an die Spindel oder an das Messer angeschlossen. Die trichterförmige Ausbildung trägt zu einer leichten Bauweise und einer guten Luftführung bei. Da die ringförmigen Seiten des weiteren Abschnittes schräg nach innen und unten auf die Spindel zu verlaufen, was auch bei einem Mulcheinsatz von besonderem Vorteil ist, läßt sich auch die Gehäuseoberseite dieser Formgebung leicht anpassen, so daß auch die Gesamthöhe des Mähers gering bleibt.

Der weitere trichterförmig ausgebildete Abschnitt des Scheibenteils liegt mit seiner Bodenseite auf dem Messer auf.

Insbesondere für einen Mulcheinsatz wird vorgeschlagen, daß der weitere Abschnitt und / oder der radial außen liegende Abschnitt des Scheibenteils an seiner Unterseite mit wenigstens einem nach unten vorstehenden Leitteil versehen ist, wobei der Leitteil als Rippe oder als ausgestanzte Lippe ausgebildet ist. Durch derartige Leitteile wird zusätzlich eine Luftströmung nach unten erzeugt, wodurch die bereits abgemähten Gutteile dem Messer zu einem nochmaligen Schnitt und einer weiteren Zerkleinerung wieder zugeführt werden.

Nach der Erfindung ist ferner vorgesehen, daß der obere Durchmesser des weiteren trichterförmig ausgebildeten Abschnittes des Scheibenteils dem oder etwa dem Innenabstand zweier an den beiden äußeren Endabschnitten des Messers vorgesehener Flügelteile entspricht. Die Flügelteile erzeugen einen Aufwind, der liegendes und noch nicht geschnittenes Gras aufstellt und nachfolgend das geschnittene Gras in Richtung auf die beiden Scheibenteilabschnitte führt.

Wird der Mäher zum Mulchen eingesetzt, so wird das geschnittene Gut nicht, wie sonst üblich, durch einen Auslaß in dem Gehäuse geblasen, sondern so geführt, daß es im wesentlichen im Rotationskreis des Messers wieder zu Boden geht. Damit eine diesbezügliche vorteilhafte Luftführung entsteht, kann nach der Erfindung dem umlaufenden Scheibenteil ein stationäres Leitblech zugeordnet sein, das oberhalb äußerer Abschnitte des umlaufenden Messers und mit Bezug auf das Messer schräg verlaufend angeordnet ist. Die von den äußeren auch die Schneidkanten aufweisenden Messerabschnitten nach oben getriebene und mit Gutteilen vermischte Luft trifft damit gegen das stationäre Leitblech und wird von diesem radial nach innen gelenkt, wo sie auf den umlaufenden Scheibenteil auftrifft und von dem trichterförmigen Abschnitt wieder nach unten gelenkt wird, so daß die Gutteile nochmals in den Wirkungsbereich des Messers, das zum Mulchen entsprechend ausgebildet ist, gelangen. Möglichst wenig Gutteile oder überhaupt keine sollen durch die Auswurföffnung austreten, weshalb nach der Erfindung noch vorgesehen ist, daß der Leitteil sich über die gesamte Umlaufbahn des Messers erstreckt, also in etwa die Form einer oben und unten abgeschnittenen Hohlkugel aufweist. Für eine gezielte Ablage nach unten ist schließlich vorgesehen, daß das stationäre Leitblech in dem Gehäuse angeordnet ist und eine gebogene Fläche aufweist, die an ihrem oberen Ende im Bereich der Außenkante des umlaufenden Scheibenteils endet und sich mit Bezug auf die Umlaufrichtung des Messers in ihrem rückwärtigen Bereich bis unterhalb des Messers erstreckt.

Sind in dem Gehäuse mehrere um vertikale Spindeln umlaufende Messer vorgesehen, so kann deren Umlaufbahnen im wesentlichen von dem Leitblech umgeben sein, daß nur den Überlappungsbereich der Messer offen läßt.

In der Zeichnung ist ein nachfolgend näher erläutertes Ausführungsbeispiel der Erfindung dargestellt. Es zeigt:
- Fig. 1: ein teilweise dargestelltes Mähergehäuse mit einem Sichelmesser und einem zwischen Messer und Gehäuseoberseite umlaufenden Scheibenteil im Schnitt,
- Fig. 2: einen Scheibenteil mit einem abgebogenen Rand,
- Fig. 3: ein Mähergehäuse mit in seiner Oberseite vorgesehenen Lufteintrittsöffnungen,
- Fig. 4: ein Mähergehäuse mit drei Messern und einer rückwärtigen Auswurföffnung in einer Ansicht von unten,
- Fig. 5: einen an seinen äußeren Abschnitt mit Leitteilen versehenen Scheibenteil in der Ansicht von unten,
- Fig. 6: die Scheibenteilausführung nach Fig. 5, wobei auch der innere Scheibenteilabschnitt mit Leitteilen versehen ist,
- Fig. 7: eine weitere Ausführungsform der Leitteile nach Fig. 5,
- Fig. 8: die Scheibenteilausführung nach Fig. 8 mit zusätzlich auf dem inneren Scheibenteilabschnitt vorgesehenen Leitteilen,
- Fig. 9: eine weitere Scheibenteilausführung mit Lochbohrungen,
- Fig. 10: einen Schnitt nach der Linie 10 - 10 in Fig. 5,
- Fig. 11: einen Schnitt nach der Linie 11 - 11 in Fig. 7,
- Fig. 12: eine ähnliche Darstellung wie in Fig. 1, wobei zusätzlich ein stationäres Leitblech vorgesehen ist,
- Fig. 13: den Verlauf des unteren Endes des Leitbleches in einem rückwärtigen Umlaufbereich des Messers,
- Fig. 14: ein Mähergehäuse mit drei Scheibenteilen, drei Messern und einem diese umgebenden einzigen Leitblech,
- Fig. 15: die Einzelteile der Ausführung nach Fig. 14,
- Fig. 16: eine ähnliche Darstellung wie in Fig. 14, jedoch ohne Messer und ohne umlaufende Scheibenteile,
- Fig. 17: einen Schnitt nach der Linie 17 - 17 in Fig. 16,
- Fig. 18: einen Schnitt nach der Linie 18 - 18 in Fig. 16,
- Fig. 19: einen Schnitt nach der Linie 19 - 19 in Fig. 16,
- Fig. 20: eine Ansicht von unten des in Fig. 12 dargestellten umlaufenden Scheibenteils,
- Fig. 21: den Scheibenteil nach Fig. 20 in Seitenansicht und
- Fig. 22: einen Schnitt nach der Linie 22 - 22 in Fig. 20.

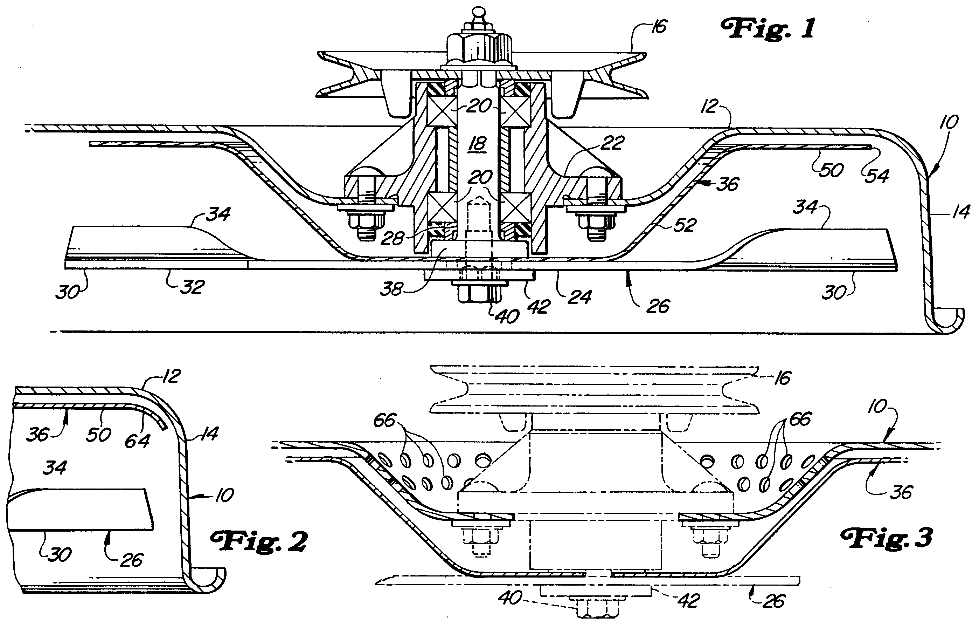

In Fig. 1 der Zeichnung ist ein Sichelmäher für den Rasenschnitt teilweise dargestellt. Derartige Sichelmäher, die mehrere Schneideinheiten aufweisen können, sind in bekannter Weise an einen Rasentraktor anschließbar. Man erkennt in Fig. 1 ein nach unten offenes Gehäuse 10 mit einer Oberseite 12 und einer von dort nach unten geführten Seitenwand 14. Zum Antrieb einer jeden Schneideinheit gehört in der Regel eine Riemenscheibe 16, die von dem Rasentraktor aus über einen Riemen angetrieben wird. Die Riemenscheibe 16 ist mit einer vertikal verlaufenden Welle oder Spindel 18 drehfest verbunden, die ihrerseits über Lager 20 in einem Spindelgehäuse 22 drehbar angeordnet ist. Das Spindelgehäuse 22 selbst ist mit der Oberseite 12 des Gehäuses 10 verschraubt, und der radial innen liegende Abschnitt 24 eines in der Horizontalen umlaufenden Sichelmessers 26 ist an dem unteren Endteil 28 der Spindel 18 angeschraubt. Der radial außen liegende Abschnitt 30 des Sichelmessers 26 ist als Schneidkante 32 zum Mähen des Gutes mit einem mit Bezug auf die Drehrichtung dahinterliegenden Flügelteil 34 zum Hochblasen von Luft und abgemähtem Gut ausgebildet.

Eine tellerförmige Prellplatte oder ein Scheibenteil 36 ist derart an die Spindel 18 angeschlossen, daß er mit dem Sichelmesser 26 zusammen umläuft. Der Scheibenteil 36 ist zwischen der Oberseite des Sichelmessers 26 und einem durch die Spindel 18 definierten Schulterteil 38 positioniert. Eine Schraube 40 ist von unten in den Endteil 28 der Spindel 18 einschraubbar. Sie ist durch das Sichelmesser 26 und den Scheibenteil 36 geführt und mit einer Unterlegscheibe 42 versehen. Im angezogenen Zustand der Schraube 40 wird damit die Unterlegscheibe 42 gegen die Unterseite des Sichelmessers 26 gepreßt und Unterlegscheibe 42, Sichelmesser 26 und Scheibenteil 36 werden nach oben gegen den Schulterteil 38 gedrückt. Das Sichelmesser 26 und der Scheibenteil 36 laufen damit gemeinsam mit der Spindel 18 um, wenn diese angetrieben wird. Selbstverständlich kann auch eine andere Art der Befestigung für den Scheibenteil 36 gewählt werden. So kann beispielsweise der Scheibenteil 36 mit der Spindel 18 verschweißt sein, ein Vier- oder Sechskantloch aufweisen, wobei dann die Spindel in diesem Bereich entsprechend ausgebildet ist, oder im Bereich der Spindel 18 mit dem Sichelmesser 26 verschraubt sein.

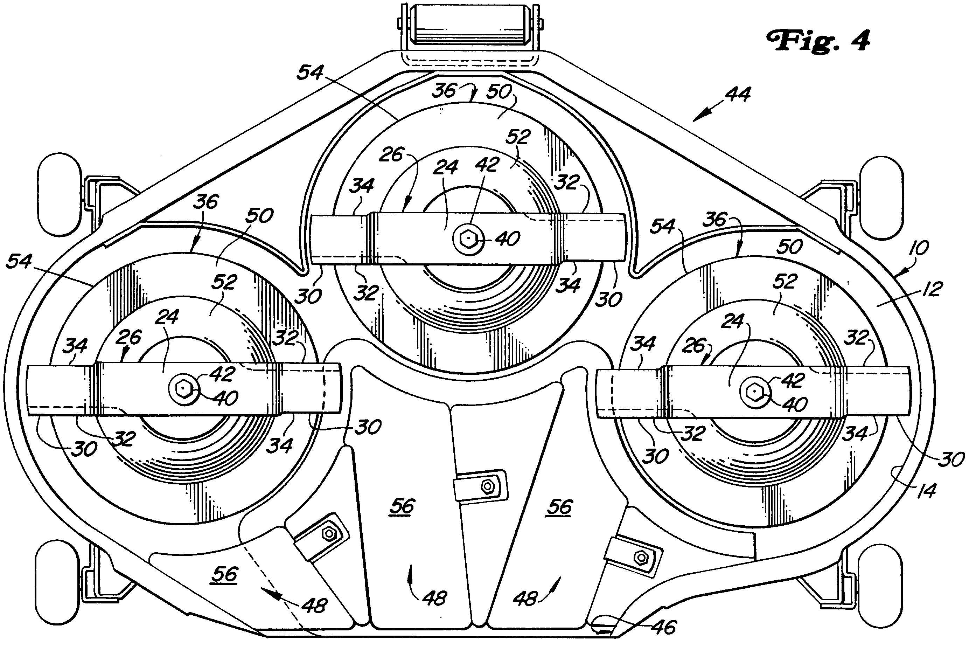

Aus Fig. 4 ist zu erkennen, daß die Mähvorrichtung drei jeweils an eine Spindel 18 angeschlossene Sichelmesser 26 mit Scheibenteilen 36 aufweist, die in einem Mähwerksgehäuse 44 angeordnet sind. Dieses ist mit einer rückwärtigen Auswurfsöffnung 46 versehen, zu der wenigstens ein Auswurfkanal 48 führt. Durch diesen gelangt geschnittenes Gut, nachdem es die Schneidkammern verlassen hat, zur Auswurföffnung. Ein derartiges Mähwerksgehäuse ist im Einzelnen in dem Dokument EP-A1-0 580 026 beschrieben, auf das hier ausdrücklich Bezug genommen wird. Die Erfindung kann aber auch bei anderen Mähwerksgehäusen eingesetzt werden, beispielsweise bei seitlich auswerfenden oder solchen, die nur ein Sichelmesser aufweisen. Sie kann auch bei von Hand geführten Rasenmähern Anwendung finden. Die Mähwerksgehäuse können auch mit einer Einrichtung zum Mulchen versehen sein und müssen nicht unbedingt an einen Rasentraktor angeschlossen sein.

Während des Einsatzes schneidet das in dem Gehäuse 10 rotierende Sichelmesser 26 das Gut mit seiner mit Bezug auf die Umlaufrichtung vorn liegenden Schneidkante 32 an seinem äußeren Abschnitt 30 ab. Der nachlaufende Flügelteil 34 erzeugt beim Umlauf einen Steigstrom und zwingt die Gutteile nach oben. Dabei fliegen einige der Gutteile gegen den Scheibenteil 36, der mit derselben Drehzahl, wie das Sichelmesser 26, umläuft. Allerdings bleiben diese Gutteile nicht an der Unterseite des Scheibenteils hängen oder sammeln sich dort an, da er sich mit dem Sichelmesser mitbewegt. Die Zentrifugalkraft des rotierenden Scheibenteils 36 wirkt auf die gegen den Scheibenteil prallenden Gutteile und bewirkt, daß diese nach außen fliegen, so daß diese Gutteile nicht an der Unterseite des Scheibenteils haften bleiben.

Die Drehbewegung des Scheibenteils 36 führt außerdem zu einer erhöhten Geschwindigkeit der Luft und der Gutteile innerhalb des Gehäuses 10. Viskoser Strömungswiderstand oder Reibung zwischen der Unterseite des Scheibenteils 36 und der Luft innerhalb des Gehäuses führen auch zu einer Erhöhung der Luftgeschwindigkeit. Auch die generelle Ausbildung des Scheibenteils 36 führt zu einer Erhöhung des Luftstroms. Es wurde bereits darauf hingewiesen, daß der Scheibenteil tellerförmig oder etwa tellerförmig ausgebildet ist. Wie insbesondere aus Fig. 1 zu erkennen ist, besteht der Scheibenteil 36 aus einem äußeren ringförmigen und ebenen Abschnitt 50, der zu dem Sichelmesser 26 Abstand aufweist und aus einem zweiten Abschnitt 52, der sich von dem äußeren Abschnitt schräg nach innen und nach unten erstreckt und in einen flachen und runden Bodenabschnitt übergeht, gegen den das Sichelmesser mit seinem inneren Abschnitt 24 anliegt. Durch diese Ausbildung begrenzt der Scheibenteil 36 einen besonderen Luftraum innerhalb des Gehäuses 10 oberhalb des äußeren Abschnitts 30 des Sichelmessers nahe dem nachlaufenden Flügelteil 34. Durch diese Scheibenteilausbildung ist eine Art Kanal geschaffen, in dem die Luftströmung in dem Gehäuse 10 relativ groß ist. Der zweite Abschnitt 52 des Scheibenteils verhindert, daß Hochgeschwindigkeitsluft in Bereiche eindringt, in denen die Luftströmung geringer ist, wie im Mittenbereich des Gehäuses 10 nahe der Spindel 18. Auf diese Weise kann ein großer Prozentsatz der Luft seine relativ hohe Geschwindigkeit beibehalten. Die daraus resultierende relativ große Luftströmung innerhalb des Gehäuses 10 beschleunigt das Auswerfen der Gutteile durch die Auswurföffnung 46. Gleichzeitig bewirkt die besondere Ausbildung des Scheibenteils 36, daß auch keine Gutteile in das Zentrum des Gehäuses 10 gelangen, und zwar in den Bereich der Spindel 18 und des Spindelgehäuses 22, wo ansonsten eine geringere Luftströmung wäre. Damit können sich in diesem Bereich auch keine Gutteile ansammeln oder etwa an dem Spindelgehäuse oder an anderen sich dort befindlichen Teilen haften bleiben, was wiederum dazu führen würde, daß die Luft in diesem Bereich auf Widerstände stößt, die die Luft abbremsen und den Gutauswurf beeinträchtigen würden.

Aus den Fig. 1 und 4 kann ersehen werden, daß die Außenkante 54 des Scheibenteils 36 an einer Stelle liegt, die beträchtlich höher ist als das Sichelmesser 26. Hierdurch entsteht zwischen dem Scheibenteil 36 und dem Sichelmesser 26 ein offener Bereich, durch den die Gutteile und auch die Luft aus dem Gehäuse 10 durch die Auswurföffnung 46 im rückwärtigen Teil des Gehäuses austreten können.

Infolge der durch die Ausbildung des Scheibenteils erreichbaren relativ hohen Luftströmung kann auch ein relativ kleiner Flügelteil 34 Verwendung finden. Hierdurch wiederum wird der Geräuschpegel des Sichelmessers, der weitgehend durch den Flügelteil beeinflußt wird, erheblich reduziert.

Der Fig. 4 ist ferner zu entnehmen, daß in den Auswurfkanal 48 Einsätze 56 eingesetzt werden können, wodurch für ein Mulchen der Auswurfkanal 48 teilweise blockiert ist. Der Luftfluß durch die dadurch entstandenen Auswurfkanäle 49 ist dann auch begrenzt, aber infolge des umlaufenden Scheibenteils 36 kann sich auch dann kein Gut an der Unterseite der Oberseite 12 des Gehäuses 10 festsetzen oder ansammeln.

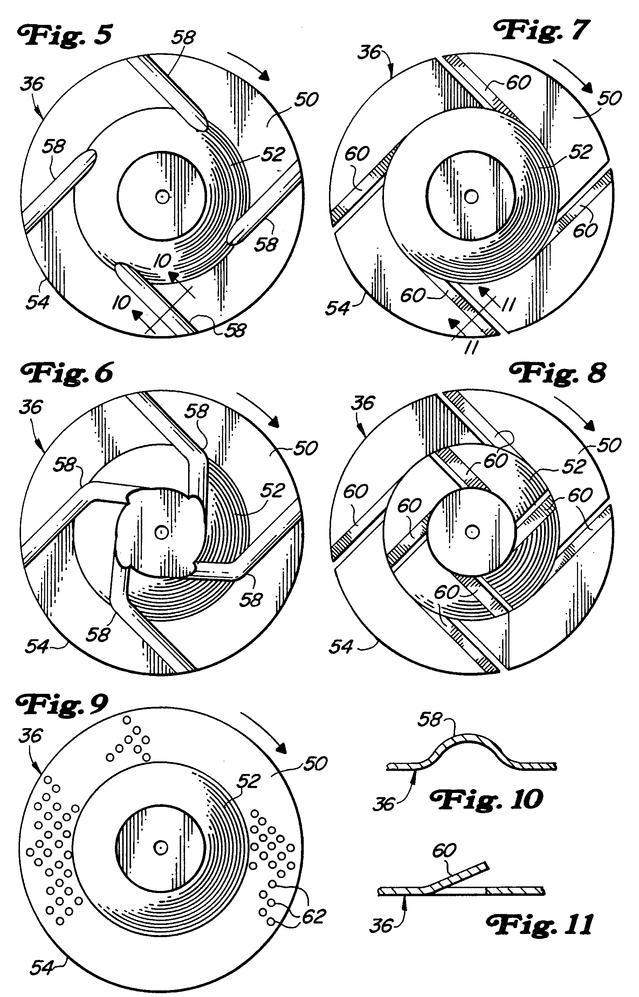

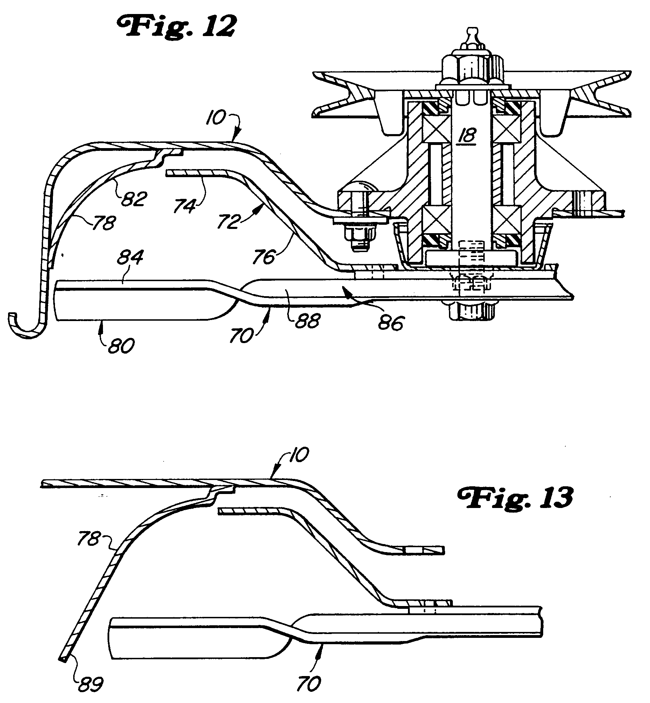

Neben der in Fig.1 gezeigten Form des Scheibenteils sind weitere Ausführungsformen in den Fig. 2, 3 und 5 bis 11 gezeigt, ohne jedoch von dem Grundprinzip abzuweichen. So zeigt Fig. 5 einen Scheibenteil 36 mit Leitflächen oder Rippen 58, die in den äußeren im wesentlichen horizontal verlaufenden Abschnitt 50 eingeformt sind. Sie können aber auch mit der Unterseite des Scheibenteils 36 verschweißt oder anders verbunden sein. Die in Fig. 10 im Schnitt gezeigten Rippen 58 erstrecken sich von dem Scheibenteil 36 nach unten und dienen dazu, Gutteile und Luft so zu richten oder sonstwie abzulenken, daß die Luftströmung in der Richtung des Sichelmessers verbessert wird. Durch die Rippen 58 wird außerdem die Fähigkeit zum Mulchen verbessert, da die Rippen die Gutteile zu einem nochmaligen Schneiden bzw. Zerkleinern durch das Sichelmesser wieder nach unten wandern lassen. Fig. 6 zeigt eine weitere Ausführungsform mit Leitflächen oder Rippen 58, die in den im wesentlichen horizontal verlaufenden Abschnitt 50 und in den schräg nach unten verlaufenden Abschnitt 52 des Scheibenteils 52 eingeformt sind. Hierdurch wird eine ähnliche Wirkung, wie bei der Ausführungsform nach Fig. 5 erzielt. Bei der Ausführungsform nach Fig. 7, die im Schnitt in Fig. 11 gezeigt ist, sind gestanzte Lippen 60 vorgesehen, die sich von dem Abschnitt 50 nach unten erstrecken. Sie dienen dem gleichen Zweck, wie die Rippen 58. Bei der Ausführung nach Fig. 8 sind entsprechende Lippen 60 auch noch in dem Abschnitt 52 vorgesehen. Diese unterstützen ein Rückführen der Gutteile zum Sichelmesser 26 für ein Mulchen weiter.

Ähnliche Vorteile bringt die Ausführung nach Fig. 9. Dort sind Löcher 62 in dem äußeren Abschnitt 50 des Scheibenteils 36 vorgesehen. Durch diese wird außerdem die Masse des umlaufenden Scheibenteils verringert und damit auch das Trägheitsmoment. Durch das relativ kleine Trägheitsmoment des umlaufenden Scheibenteils 36 wird auch die Lebensdauer einer Messerkupplung verlängert, über die das Sichelmesser zum Stillstand kommt, wenn der Messerumlauf schnell beendet werden muß.

Bei der Ausführungsform nach Fig. 2 ist der äußere Abschnitt 50 des Scheibenteils 36 mit einem nach unten abgebogenen Rand 64 versehen, so daß der dort gezeigte Scheibenteil im wesentlichen der Formgebung des Gehäuses 10 entspricht und die Hochgeschwindigkeitsluft in dem Gehäuse 10 kanalisiert.

Die in den Fig. 1 bis 11 gezeigten Ausführungsformen können aus einem metallischen Werkstoff beispielsweise durch Stanzen und / oder Pressen hergestellt werden. Sie können aber auch aus Kunststoff bestehen, wobei die Rippen 58, Lippen 60 oder Löcher 62 beim Gießen eingeformt werden.

Bei der in Fig. 1 gezeigten Ausführung wird die Luft zwischen dem Scheibenteil 36 und der Oberseite 12 des Gehäuses 10 einem viskosen Strömungswiderstand und der Zentrifugalkraft ausgesetzt, was dazu führen kann, das ein Teil der Luft nach außen von der Spindel 18 fort gedrängt wird, wodurch zwischen dem Scheibenteil 36 und der Oberseite 12 des Gehäuses 10 ein partielles Vakuum entstehen kann. Um dem abzuhelfen, können, wie es in Fig. 3 gezeigt ist, in der Oberseite 12 des Gehäuses 10 Öffnungen 66 vorgesehen werden. Durch diese kann Luft von außen in den Bereich zwischen Oberseite 12 und Scheibenteil 36 durch den viskosen Strömungswiderstand und die Zentrifugalkraft oberhalb des Scheibenteils eingesaugt werden. Hierdurch wiederum wird die Luft oberhalb des Scheibenteils nach außen und in die Hochgeschwindigkeitsluft unterhalb des Scheibenteils nahe der Seitenwand 14 des Gehäuses gelenkt, wodurch die Luftströmung innerhalb des Gehäuses 10 als auch der Auswurf durch die Auswurföffnung 46 verbessert wird. Die Luftströmung oberhalb des Scheibenteils 36 trägt auch dazu bei, daß keine Gutteile zwischen dem Scheibenteil 36 und dem Gehäuse 10 eingeschlossen werden. Die in der Oberseite des Gehäuses 10 vorgesehenen Öffnungen 66 sind bei einem Mulcheinsatz, bei dem die Auswurfkanäle 48 teilweise geschlossen sind, besonders vorteilhaft. Zum Mulchen werden die Auswurfkanäle 48 über die Einsätze 56 verengt, was dazu führen kann, daß der Luftaustritt aus dem Gehäuse 10 verringert ist, so daß auch weniger Luft oder gar keine in das Gehäuse eintritt. Gelangt aber keine oder nur wenig Luft von unten in das Gehäuse 10, so entsteht keine oder nur wenig Sogkraft, über die das zu schneidende Gras aufgestellt werden könnte, was die Schnittqualität negativ beeinflußt. Sind dagegen in der Gehäuseoberseite die Öffnungen 66 vorgesehen, so kann Luft nachgesaugt werden.

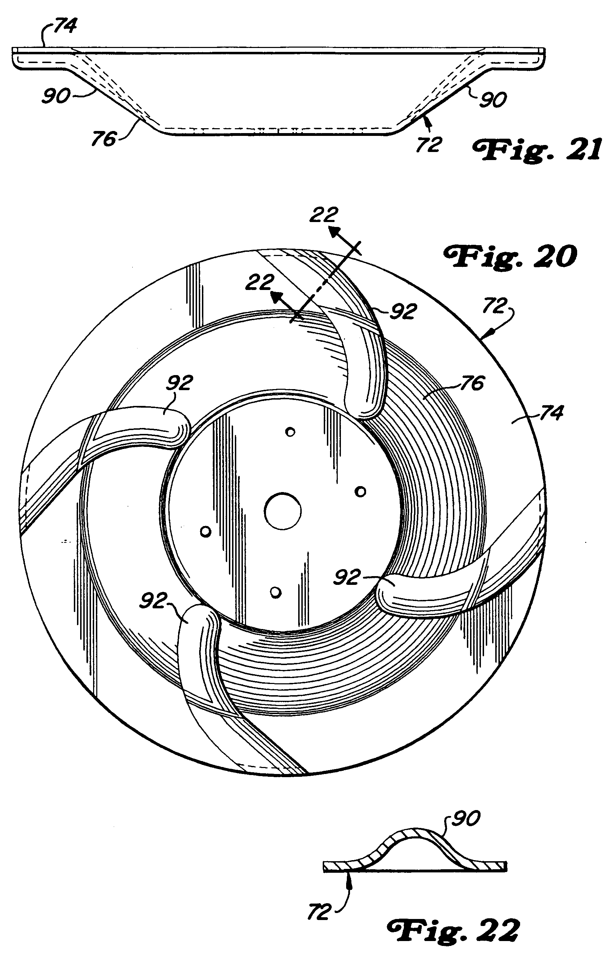

In den Fig. 12 bis 22 ist ein weiteres Ausführungsbeispiel der Erfindung dargestellt. Dieses Ausführungsbeispiel eignet sich besonders gut für einen Mulcheinsatz. So zeigt Fig. 12 ein Mulchmesser 70 in der Ansicht von hinten, wenn es in dem Gehäuse 10 umläuft. Wie bei dem ersten Ausführungsbeispiel ist das Mulchmesser 70 an einer Spindel 18 drehfest angeordnet und wird von dieser aus angetrieben. Auch ein Scheibenteil 72 ist an das Messer oder an die Spindel 18 angeschlossen und läuft mit derselben Drehzahl wie das Mulchmesser 70 um. Der Scheibenteil 72 besteht aus einem äußeren radialen Abschnitt 74, einen schräg verlaufenden Abschnitt 76 und aus einem Bodenabschnitt. Der äußere radiale Abschnitt 74 weist zu dem Messer 70 einen Vertikalabstand auf und verläuft im wesentlichen horizontal. An das innere Ende des äußeren Abschnittes 74 schließt sich der schräg verlaufende Abschnitt 76 an, der in Richtung auf das Messer 70 verläuft und dort in den Bodenabschnitt übergeht. Im Gegensatz zu dem ersten Ausführungsbeispiel ist bei dem zweiten Ausführungsbeispiel kein Auswurfkanal, aber noch ein stationäres Leitblech 78 vorgesehen, das im wesentlichen um den gesamten Umfang des Messers 70 gezogen ist. Das stationäre Leitblech 78 befindet sich oberhalb des äußeren Abschnittes 80 des Messers 70 und weist eine Fläche 82 auf, die mit Bezug auf das Messer 70 schräg verläuft. Wenn das Gut durch den äußeren Abschnitt 80 des Messers geschnitten wird, lenkt ein nachlaufender und nach oben gerichteter Flügelteil 84 des Messers 70 Gutteile und Luft nach oben gegen das stationäre Leitblech 78. Die schräg verlaufende Fläche 82 des Leitbleches lenkt dann Luft und Gutteile nach innen zu dem schräg verlaufenden Abschnitt 76 des Scheibenteils 72, der seinerseits die Luft und die Gutteile wieder nach unten auf einen inneren Mulchabschnitt 86 des Messers 70 lenkt, der eine vorlaufende Schneidkante und einen nach unten gerichteten Flügelteil 88 aufweist. Sobald die Gutteile mit dem Mulchabschnitt 86 in Berührung kommen, werden sie ein zweites Mal geschnitten und über den Flügelteil 88 nach unten zur Ablage auf dem Boden gelenkt. Fig. 13 zeigt einen rückwärtigen Abschnitt des Gehäuses 10 im Schnitt. Man erkennt, daß dort das stationäre Leitblech 78 eine untere Kante 89 aufweist, die tiefer heruntergezogen ist und zu der Spindel 18 einen größeren Abstand als im vorderen oder seitlichen Gehäusebereich hat, so daß im rückwärtigen Gehäuseabschnitt mehr Gutteile auf den Boden abgelegt werden.

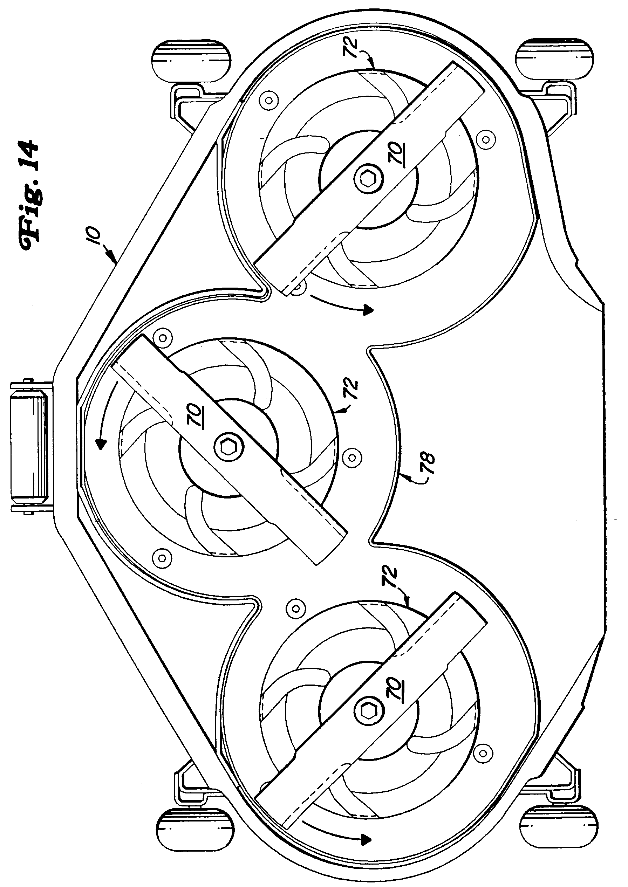

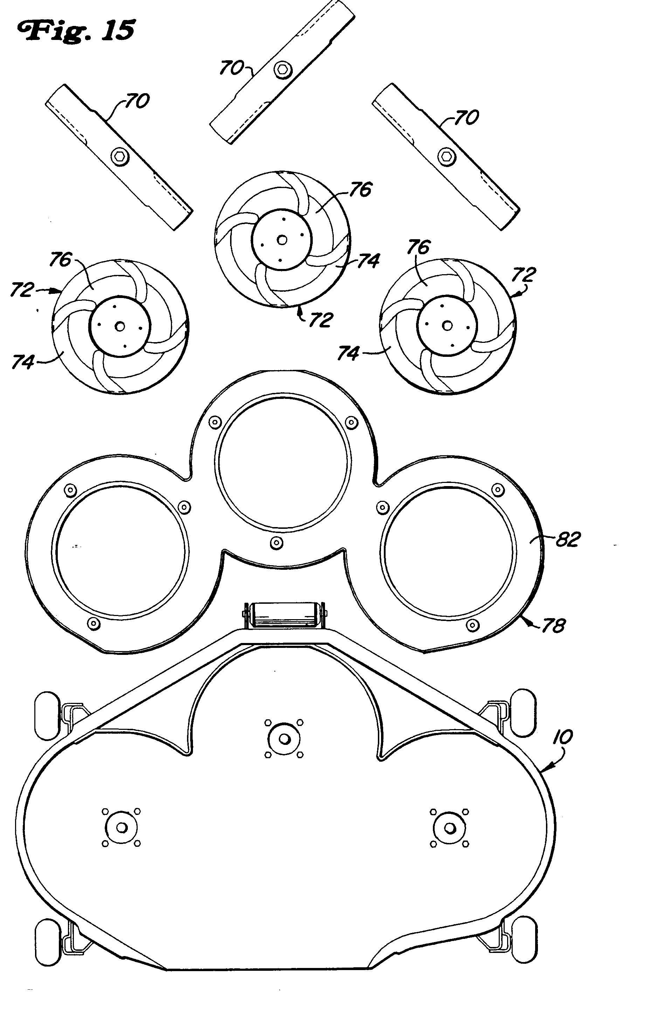

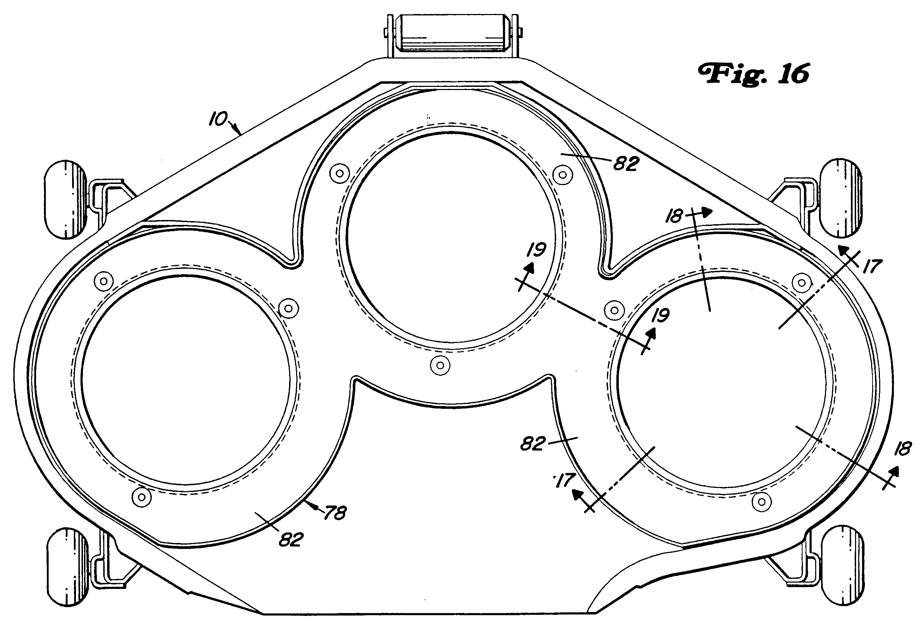

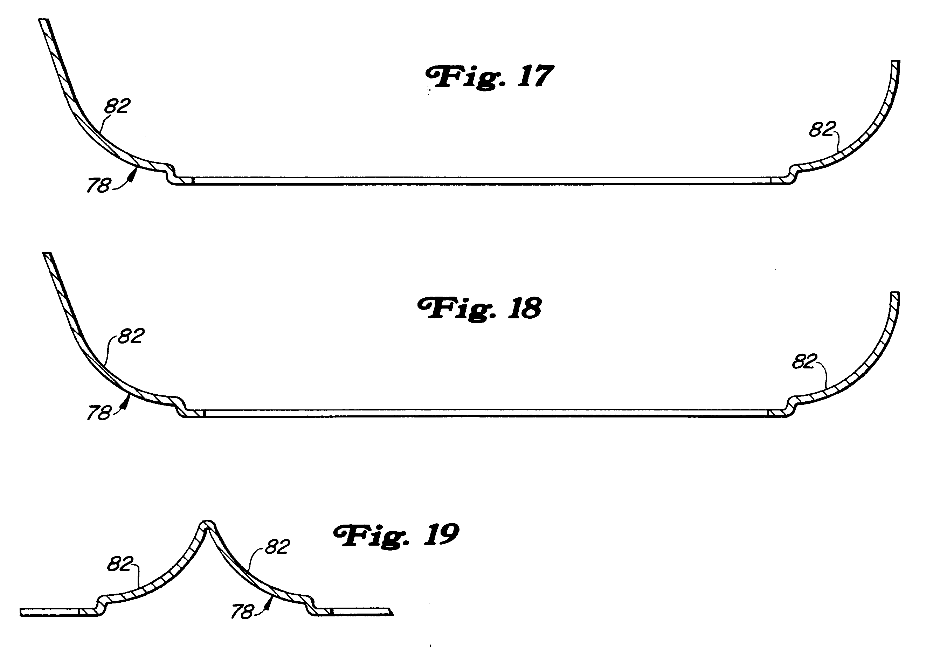

Fig. 14 und 15 zeigen ein Gehäuse 10 mit mehreren Messern von unten, wobei alle Messer von einem einzigen stationären Leitblech 78 umgeben sind. Das Leitblech 78 ist damit einstückig ausgebildet und umgibt den wesentlichen Umfang bzw. Rotationskreis der dort gezeigten drei Messer 70. Fig. 15 zeigt die entsprechenden Einzelteile. Fig. 17 bis 19 zeigen die in Fig. 16 eingezeichneten Schnitte. Aus den Fig. 17 bis 19 ist erkennbar, daß die Flächen 82 des stationären Leitbleches 78 sich im eingebauten Zustand von der Oberseite des Gehäuses nach unten erstrecken und mit Bezug auf das Messer schräg verlaufend sind.

Die Fig. 20 bis 22 zeigen die umlaufenden Scheibenteile 72 für das zweite Ausführungsbeispiel im einzelnen und größeren Maßstab. Mehrere Ablenkteile 90 und 92 erstrecken sich von dem Scheibenteil 72 nach unten. Sie können an dem äußeren Abschnitt 74 und an dem inneren schräg verlaufenden Abschnitt 76 der Scheibenteile 72 vorgesehen sein. Sie tragen zusätzlich dazu bei, daß Luft und Gutteile nach unten zu den Mulchabschnitten 86 der Messer 70 gelenkt werden. Fig. 22 zeigt im Schnitt, wie ein Ablenkteil 90 sich nach unten erstreckt.

Alle umlaufenden Scheibenteile 72 können aus einem Kunststoff gefertigt werden.

## Patentansprüche

1. Mäher mit einem bodenwärts offenen und eine im wesentlichen vertikal verlaufende Seitenwand (14) aufweisenden Gehäuse (10), in dem wenigstens ein durch eine vertikale Spindel (18) antreibbares Messer (26, 70) umläuft, wobei zwischen dem Messer (26, 70) und der Oberseite (12) des Gehäuses (10) ein Scheibenteil (36, 72) mit einem radialen, äußeren und ringförmigen oder etwa ringförmigen Abschnitt (50, 74) umläuft, der zu dem Messer (26, 70) einen Vertikalabstand aufweist, dadurch gekennzeichnet, daß der Scheibenteil (36, 72) einen weiteren Abschnitt (52, 76) aufweist, der einen Raum zwischen Messeroberseite, Spindel (18) und der Innenseite des radial außen liegenden Abschnittes (50, 74) des Scheibenteils (36, 72) schließt.

2. Mäher nach Anspruch 1, dadurch gekennzeichnet, daß der weitere Abschnitt (52, 76) des Scheibenteils (36, 72) trichterförmig ausgebildet ist.

3. Mäher nach Anspruch 2, dadurch gekennzeichnet, daß der weitere trichterförmig ausgebildete Abschnitt (52, 76) des Scheibenteils (36, 72) mit seiner Bodenseite auf dem Messer (20, 70) aufliegt.

4. Mäher nach einem oder mehreren der vorherigen Ansprüche, dadurch gekennzeichnet, daß der weitere Abschnitt (52, 76) und / oder der radial außen liegende Abschnitt (50, 74) des Scheibenteils (36, 72) an seiner Unterseite mit wenigstens einem nach unten vorstehenden Leitteil versehen ist.

5. Mäher nach Anspruch 4, dadurch gekennzeichnet, daß der Leitteil als Rippe (58) oder als ausgestanzte Lippe (60) ausgebildet ist.

6. Mäher nach einem oder mehreren der vorherigen Ansprüche, dadurch gekennzeichnet, daß der obere Durchmesser des weiteren trichterförmig ausgebildeten Abschnittes (52, 76) des Scheibenteils (36, 72) dem oder etwa dem Innenabstand zweier an den beiden äußeren Endabschnitten (30) des Messers (26, 70) vorgesehener Flügelteile (34, 84) entspricht.

7. Mäher nach einem oder mehreren der vorherigen Ansprüche, dadurch gekennzeichnet, daß dem umlaufenden Scheibenteil (36, 72) ein stationäres Leitblech (78) zugeordnet ist, das oberhalb äußerer Abschnitte (80) des umlaufenden Messers (70) und mit Bezug auf das Messer schräg verlaufend angeordnet ist.

8. Mäher nach Anspruch 7, dadurch gekennzeichnet, daß der Leitteil (78) sich über die gesamte Umlaufbahn des Messers (70) erstreckt.

9. Mäher nach Anspruch 8, dadurch gekennzeichnet, daß das stationäre Leitblech (78) in dem Gehäuse (10) angeordnet ist und eine gebogene Fläche (82) aufweist, die an ihrem oberen Ende im Bereich der Außenkante des umlaufenden Scheibenteils (72) endet und sich mit Bezug auf die Umlaufrichtung des Messers (70) in ihrem rückwärtigen Bereich bis unterhalb des Messers (70) erstreckt.

10. Mäher nach Anspruch 7, dadurch gekennzeichnet, daß in dem Gehäuse (10) mehrere um vertikale Spindeln (18) umlaufende Messer (70) vorgesehen sind, deren Umlaufbahnen im wesentlichen von dem Leitblech (78) umgeben sind.
